(19) Europäisches Patentamt
European Patent Office
Office européen des brevets

(11) **EP 3 435 327 A1**

(12) **EUROPEAN PATENT APPLICATION**
published in accordance with Art. 153(4) EPC

(43) Date of publication:
**30.01.2019 Bulletin 2019/05**

(21) Application number: **17789441.7**

(22) Date of filing: **21.04.2017**

(51) Int Cl.:
*G06T 7/00* [(2017.01)]  *B60R 21/00* [(2006.01)]
*G01B 11/02* [(2006.01)]  *G06T 1/00* [(2006.01)]
*G06T 7/593* [(2017.01)]  *G08G 1/00* [(2006.01)]
*H04N 7/18* [(2006.01)]

(86) International application number:
**PCT/JP2017/016088**

(87) International publication number:
**WO 2017/188158 (02.11.2017 Gazette 2017/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **27.04.2016 JP 2016088979**

(71) Applicant: **KYB Corporation
Tokyo 105-6111 (JP)**

(72) Inventor: **HASEBE, Atsutoshi
Tokyo 105-6111 (JP)**

(74) Representative: **Markfort, Iris-Anne Lucie
Lorenz & Kollegen
Patentanwälte Partnerschaftsgesellschaft mbB
Alte Ulmer Straße 2
89522 Heidenheim (DE)**

(54) **DEVICE FOR DETECTING ROAD SURFACE STATE**

(57)    This device for detecting a road surface state includes: a stereo camera including a plurality of cameras that each image a road surface in front of a vehicle and are arranged such that a parallax is vertically generated; and an arithmetic processing circuit that vertically searches for corresponding points of a plurality of images taken by the plurality of cameras of the stereo camera, to thereby calculate a parallax, and calculates a height of the road surface as a state of the road surface on a basis of the calculated parallax.

FIG.2

EP 3 435 327 A1

**Description**

Technical Field

The present invention relates to a device for detecting a road surface state that detects a road surface state such as a height of a road surface by using a stereo camera.

Background Art

As a control method for an active suspension system, there is preview control to suitably control various characteristics of the suspension by detecting a condition of a road surface in front of a vehicle. As a method of detecting the condition of the road surface in front of the vehicle, there is known a stereo method using parallax information of images of the road surface in front of the vehicle which are taken by two cameras.

As a method of detecting a difference in level of a road surface by using this stereo method, for example, Patent Literature 1 describes a technology configured to: project a first image and a second image in which a road surface is stereoscopically imaged on an XY plane coordinate system; set a detection area centering prescribed coordinates (X, Y) on the plane coordinate system; calculate a parallax v1 when an image of the detection area is on a road surface position; set a comparison area centering coordinates (X-v1, Y) obtained by subtracting the parallax v1 from the second image; and compare the image of the detection area with the image of the comparison area to obtain a height from a road surface of the detection area. According to Patent Literature 1, even if it is difficult to identify a road surface, a difference in height of a level difference from the road surface can be detected.

Citation List

Patent Literature

Patent Literature 1: Japanese Patent Application Laid-open No. 2014-89548

Disclosure of Invention

Technical Problem

In a case where two cameras are arranged, spaced apart from each other on the left and right in a horizontal direction such that a parallax only in the horizontal direction is generated in a stereo camera, search for corresponding points between a reference image and a referenced image for stereo matching is horizontally performed.

However, the level difference of the road surface is often formed at a portion such as a joint generated due to construction, repair, or the like of the road surface. When the level difference formed at the portion such as the joint of the road surface is imaged by the stereo camera, the level difference portion appears as an edge in the horizontal direction but does not appear as an edge in a vertical direction in the thus obtained image. Therefore, in a method of horizontally searching for the corresponding points for stereo matching, a peak of a degree of matching does not clearly appear with respect to the stereo image obtained by imaging the level difference portion of the road surface. Thus, there has been a problem in that the parallax cannot be sufficiently accurately calculated, and it is difficult to highly accurately detect the height of the road surface.

In view of the above-mentioned circumstances, it is an object of the present invention to provide a device for detecting a road surface state that is capable of highly accurately calculating a parallax from a stereo image obtained by imaging a level difference portion of a road surface and is capable of more highly accurately detecting a road surface state such as a height of the road surface.

Solution to Problem

In order to accomplish the above-mentioned object, a device for detecting a road surface state according to an embodiment of the present invention includes:

a stereo camera including a plurality of cameras that each image a road surface in a movement direction of an object and are arranged such that a parallax is vertically generated; and
an arithmetic processing circuit that vertically searches for corresponding points of a plurality of images taken by the plurality of cameras of the stereo camera, to thereby calculate a parallax, and detects a state of the road surface on a basis of the calculated parallax.

In the device for detecting a road surface state according to the present invention, the arithmetic processing circuit vertically searches for the corresponding points of the plurality of images taken by the plurality of cameras arranged such that the parallax is vertically generated, to thereby calculate the parallax, and detects the state of the road surface on the basis of the calculated parallax. Thus, the parallax can be highly accurately calculated from a stereo image obtained by imaging a level difference portion of a road surface, and a road surface state such as a height of the road surface and presence/absence of an obstacle on the road surface can be more highly accurately detected.

Further, the arithmetic processing circuit may be configured to extract a component of an edge in a horizontal axis direction of the image on the basis of the calculated parallax and discriminate a level difference of the road surface and a slope from each other on a basis of a relationship between a distance between a plurality of edges adjacent to each other in a vertical axis direction of the image and a displacement amount of a height.

Brief Description of Drawings

[Fig. 1] A diagram for describing a method of calculating a distance from a stereo camera arranged such that a parallax can be vertically generated to a point for detection on a road surface.

[Fig. 2] A diagram showing the stereo camera and the road surface including the point for detection from the side.

[Fig. 3] A block diagram showing a configuration of a road surface displacement detection device of an embodiment according to the present invention.

[Fig. 4] A diagram showing predictive tire traveling tracks in an image space.

[Fig. 5] A flowchart showing a generation procedure of vertical-parallax information in an arithmetic processing circuit of a device for detecting a road surface state of this embodiment.

[Fig. 6] A diagram showing an example of an image of a road surface including a level difference in front of a vehicle.

[Fig. 7A] A diagram showing a state of first stereo matching when within a parallax search range in a vertical-search example.

[Fig. 7B] A diagram showing a state of stereo matching when a position of a parallax search window with respect to a referenced image is vertically moved by a distance corresponding to one pixel within the parallax search range in the vertical-search example.

[Fig. 7C] A diagram showing a state of stereo matching when the position of the parallax search window with respect to the referenced image is vertically moved by a distance corresponding to two pixels within the parallax search range in the vertical-search example.

[Fig. 7D] A diagram showing a state of stereo matching when the position of the parallax search window with respect to the referenced image is vertically moved by a distance corresponding to three pixels within the parallax search range in the vertical-search example.

[Fig. 8] A diagram showing a state of stereo matching in horizontal search.

Mode(s) for Carrying Out the Invention

Hereinafter, an embodiment associated with a device for detecting a road surface state of the present invention will be described with reference to the drawings.

[Outline]

This embodiment relates to a device for detecting a road surface state that detects a road surface state such as a height of a road surface and presence/absence of an obstacle in front of a vehicle by using a plurality of images taken by a stereo camera.

The stereo camera includes a plurality of cameras, for example, two cameras. The plurality of cameras each use a space in front of the vehicle as an imaging range. The plurality of cameras are spaced apart from each other such that a parallax can be vertically generated. The plurality of cameras are arranged such that optical axes thereof are parallel.

Images respectively taken by the plurality of cameras are processed by an arithmetic processing circuit. The arithmetic processing circuit calculates parallax information of corresponding points of the respective images, calculates a distance from the stereo camera to a point for detection of the road surface on the basis of the calculated parallax information and parameter information of the stereo camera, and detects a road surface state such as a height of the road surface and presence/absence of an obstacle on the road surface on the basis of the calculated distance.

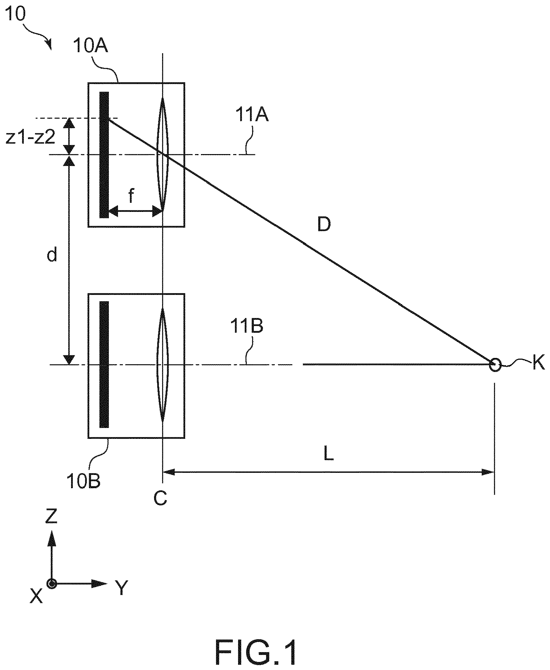

Fig. 1 is a diagram for describing a method of calculating a distance L from a stereo camera 10 arranged such that a parallax can be vertically generated to a point for detection K on the road surface. For the sake of description, it is assumed that the point for detection K exists on an optical axis 11B of a lower camera 10B. In the figure, a distance D from (a reference long line C of) the stereo camera 10 to the point for detection K is calculated in accordance with Expression 1 below.

$$D = (f \times d)/(z1 - z2) \qquad \qquad ...(1)$$

Where d denotes a distance between the cameras and f denotes a focal distance of a lens. Further, z1 - z2 denotes a vertical parallax of two images taken by an upper camera 10A and the lower camera 10B, z1 denotes a value of a z-coordinate of a point at which the point for detection K is imaged on an imaging plane of the upper camera 10A, and z2 denotes a value of a z-coordinate of a point at which the point for detection K is imaged on an imaging plane of the lower camera 10B.

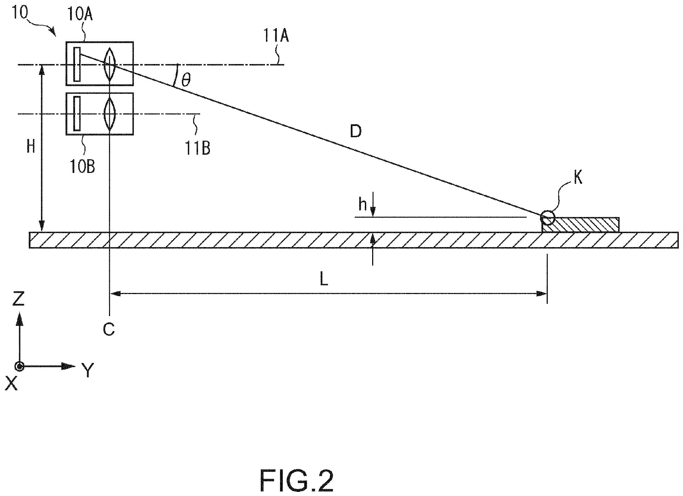

Fig. 2 is a diagram describing a method of calculating the height h of the point for detection K on the road surface by using the above-mentioned stereo camera 10.

As shown in the figure, the height h of the point for detection K can be seen in a direction downwardly inclined from an optical axis 11A of the upper camera 10A by an angle θ, and thus it is calculated as follows:

$$h = H - Dsin\theta \qquad \qquad ...(2)$$

Further, the distance L from the cameras 10R, 10L to the point for detection K in a horizontal direction (Y-axis direction) is calculated as follows:

$$L = Dcos\theta \qquad \qquad ...(3)$$

Where H denotes a height of the optical axis 11A of the upper camera 10A from the road surface.

In this manner, by using the vertical-parallax information calculated in accordance with the stereo method, the distance L from the stereo camera 10 to the point for detection K on the road surface and the height h can be calculated.

[Configuration of Device for Detecting Road Surface State of This Embodiment]

Hereinafter, a configuration of the device for detecting a road surface state of this embodiment will be described in more detail.

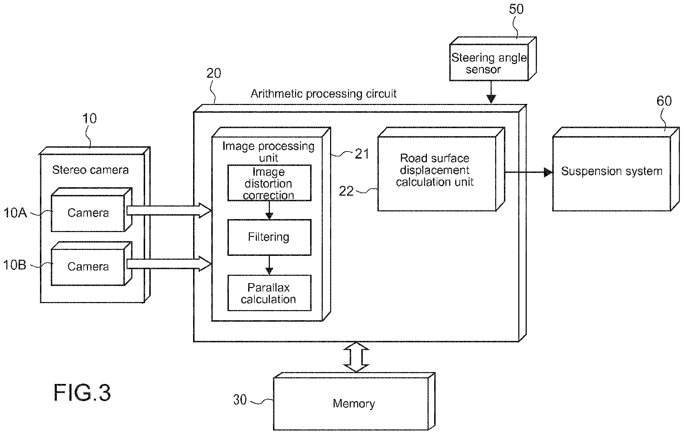

Fig. 3 is a block diagram showing a configuration of a device for detecting a road surface state 1 of this embodiment.

As shown in the figure, the device for detecting a road surface state 1 of this embodiment includes the stereo camera 10, the arithmetic processing circuit 20, and a memory 30. It should be noted that the memory 30 may be provided inside the arithmetic processing circuit 20.

The stereo camera 10 includes two cameras 10A, 10B. The two cameras 10A, 10B use an imaging range in front of the vehicle. The two cameras 10A, 10B are spaced apart from each other such that a parallax can be vertically generated. The two cameras 10A, 10B are arranged such that optical axes thereof are parallel.

The cameras 10A, 10B include image pickup elements such as a charge-coupled device (CCD) and a complementary metal oxide semiconductor (CMOS). Imaging signals each obtained by each of the cameras 10A, 10B are supplied to the arithmetic processing circuit 20.

The arithmetic processing circuit 20 is a device that performs arithmetic processing for parallax calculation and road surface displacement detection by using the memory 30. The arithmetic processing circuit 20 includes, for example, a field-programmable gate array (FPGA) and the like, though not limited thereto. The arithmetic processing circuit 20 includes, for example, another integrated circuit such as an application specific integrated circuit (ASIC).

The arithmetic processing circuit 20 functionally includes an image processing unit 21 and a road surface displacement calculation unit 22.

The image processing unit 21 digitizes two video signals supplied from the stereo camera 10 as images and performs filtering and the like such as distortion correction of each image and noise cancelling from each image as preprocessing. In addition, the image processing unit 21 vertically searches for a correspondence between the images by using the one image (the image of the camera 10A) subjected to the preprocessing as a referenced image and using the other image (the image of the camera 10B) as a referenced image, and generates vertical-parallax information.

The road surface displacement calculation unit 22 calculates coordinates of two predictive tire traveling tracks, which the left and right tires of the vehicle are predicted to follow thereafter, in an image space of the stereo camera 10.

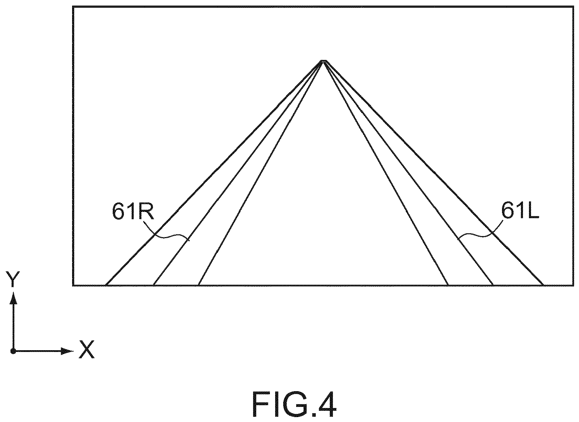

Fig. 4 is a diagram showing the predictive tire traveling tracks in the image space. Those predictive tire traveling tracks 61R, 61L are only need to be determined as approximate positions including margins on the basis of a distance between the left and right tires of the vehicle, the position of the stereo camera 10, and the like. Further, the road surface displacement calculation unit 22 is also capable of calculating the predictive tire traveling tracks 61R, 61L on the basis of steering angle information of the vehicle which is detected by a steering angle sensor 50 provided in the vehicle.

By using the vertical-parallax information determined by the image processing unit 21, the road surface displacement calculation unit 22 calculates distances L of one or more points for detection on the predictive tire traveling tracks 61R, 61L from the stereo camera 10 and heights h of the road surface at the one or more points for detection on the predictive tire traveling tracks 61R, 61L. At this time, on the basis of the vertical-parallax information of an image of one frame, the road surface displacement calculation unit 22 may detect the distances L of a plurality of points for detection K from the stereo camera 10 and the heights h of the road surface at the plurality of points for detection K. Then, the road surface displacement calculation unit 22 generates, from information about the calculated distances L and heights h, road surface displacement information for preview control on a suspension system 60 and supplies it to the suspension system 60.

[Operation of Device for Detecting Road Surface State 1]

Next, an operation of the device for detecting a road surface state 1 of this embodiment will be described.

First of all, imaging signals respectively captured by the two cameras 10A, 10B of the stereo camera 10 are supplied to the arithmetic processing circuit 20. The arithmetic processing circuit 20 performs preprocessing such as distortion correction and noise cancelling on each of the imaging signals at the image processing unit 21 and saves the resulting two images in the memory 30. Here, an image obtained by the camera 10A will be referred to as a reference image and an image obtained by the camera 10B will be referred to as a referenced image.

Next, the arithmetic processing circuit 20 vertically searches for corresponding points between the reference image and the referenced image at the image processing unit 21, and generates vertical-parallax information of both the images.

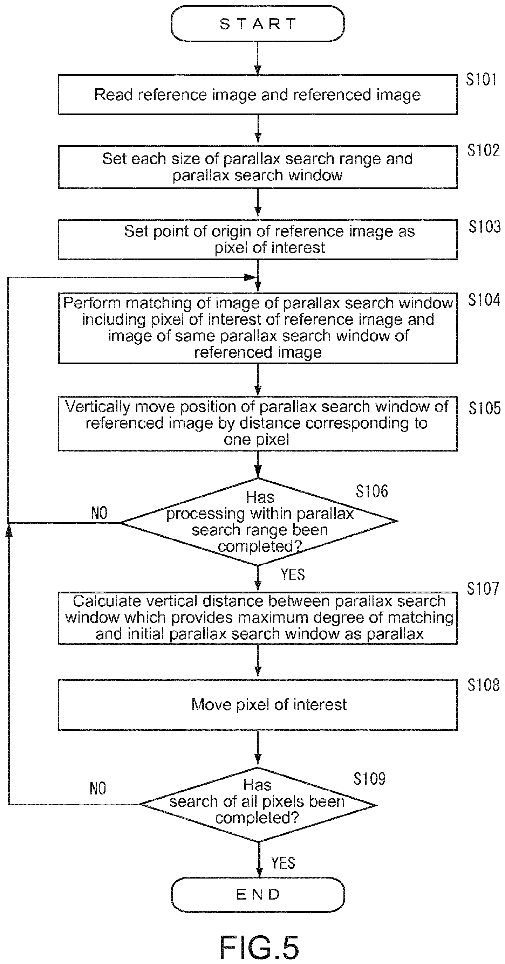

Fig. 5 is a flowchart showing a generation procedure of the vertical-parallax information at the arithmetic processing circuit 20 of the device for detecting a road surface state of this embodiment 1.

First of all, in the arithmetic processing circuit 20, the image processing unit 21 reads the reference image and the referenced image from the memory 30 (Step S101).

The image processing unit 21 sets a size of a parallax search range and a size of a parallax search window to be used for vertically searching for the corresponding points between the reference image and the referenced image (Step S102). The image processing unit 21 repeats matching processing while vertically moving the parallax search window one pixel by one pixel within the parallax search range, to thereby perform vertical search. In the vertical search, for each pixel (pixel of interest) of the reference image, the image processing unit 21 vertically searches for a pixel of the referenced image, which corresponds thereto, in the following manner.

In this vertical search, the image processing unit 21 first sets a pixel at a point of origin that is a lower left corner or the like, for example, of the reference image as a first pixel of interest (Step S103), and performs stereo matching of an image of a parallax search window including this pixel of interest at a predetermined position and an image of a parallax search window similarly including a pixel that is a point of origin of the referenced image at a predetermined position to thereby calculate a degree of matching (Step S104).

Next, the image processing unit 21 vertically moves the position of the parallax search window of the referenced image by a distance corresponding to one pixel (Step S105), and similarly calculates a degree of matching by stereo matching (Step S104). This processing is repeated within the set parallax search range (Step S106).

The image processing unit 21 calculates a vertical distance between a parallax search window, which provides a maximum degree of matching among all degrees of matching calculated by repeating stereo matching within the parallax search range, and the initial parallax search window as a parallax (Step S107).

Next, the image processing unit 21 sets a subsequent pixel as the pixel of interest of the reference image (Step S108) and similarly performs vertical search. In this manner, the vertical search is repeated with respect to all pixels of the reference image (Step S109).

Next, a vertical-search example will be described.

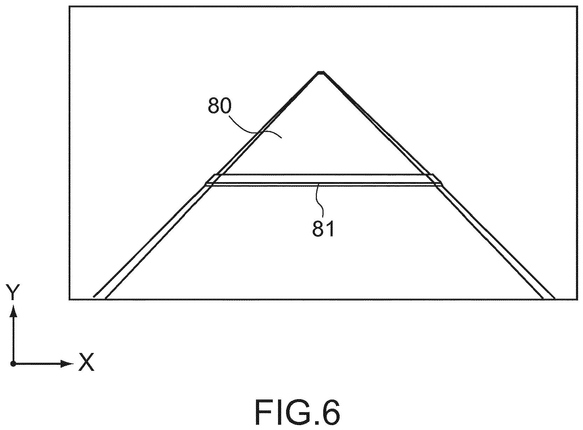

Fig. 6 is a diagram showing an example of an image of a road surface having a level difference in front of the vehicle.

As shown in the figure, in this example, a level difference 81 exists on a road surface 80. The level difference 81 extends in a direction orthogonal to a route direction. For example, the level difference 81 includes a joint or the like generated due to road surface construction, road surface repair, or the like. The level difference 81 generated on the road surface 80 due to such human work or the like appears as edge components mainly in the horizontal direction in images taken by the stereo camera 10.

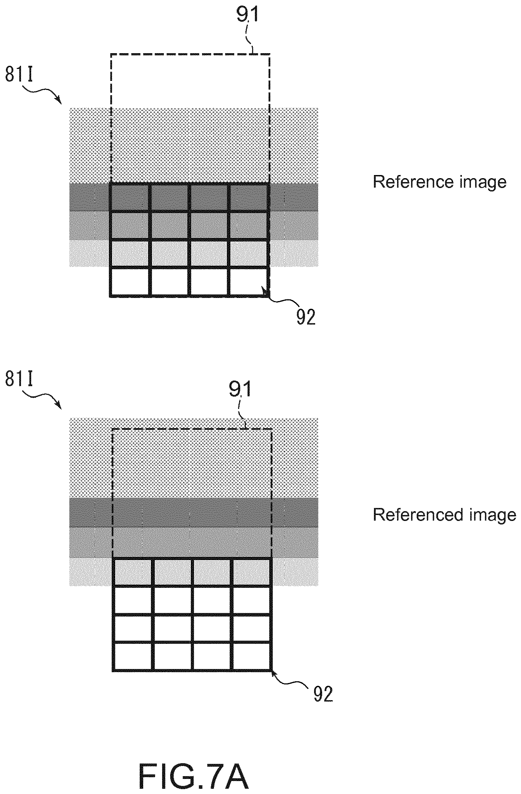

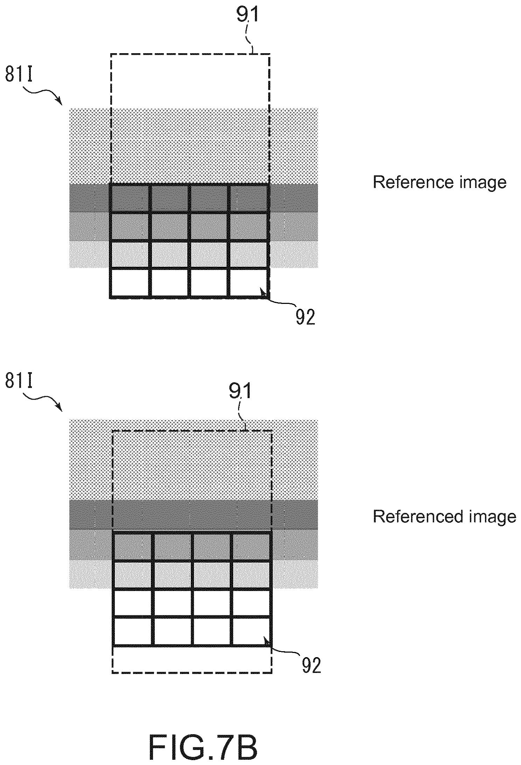

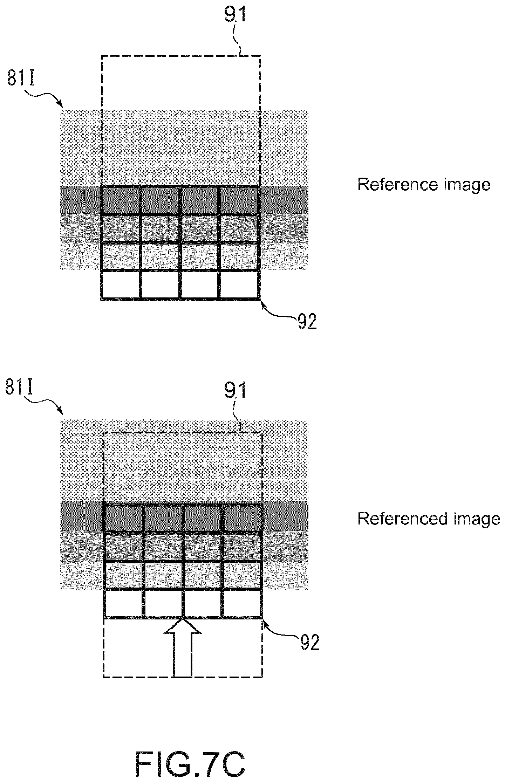

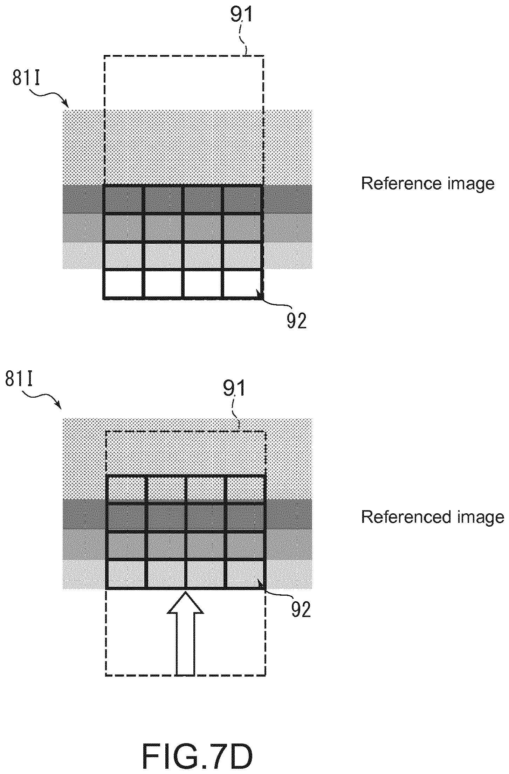

Fig. 7A or 7D is a diagram showing a vertical-search example performed in a case where an image 811 of such a level difference 81 is included in a parallax search range 91. In those figures, an upper image is the reference image and a lower image is the referenced image. Fig. 7A shows a state of first stereo matching within the parallax search range 91. In the figure, the parallax search range 91 of the reference image and the parallax search range 91 of the referenced image are at the same position in a coordinate space of the image. Fig. 7B shows a state of stereo matching when the position of the parallax search window 92 with respect to the referenced image is vertically moved by a distance corresponding to one pixel within the parallax search range 91. Fig. 7C shows a state of stereo matching when the position of the parallax search window 92 with respect to the referenced image is vertically moved by a distance corresponding to two pixels within the parallax search range 91. Fig. 7D shows a state of stereo matching when the position of the parallax search window 92 with respect to the referenced image is vertically moved by a distance corresponding to three pixels within the parallax search range 91. In this example, it is assumed that the size of the parallax search window 92 is $4 \times 4$ pixels. It should be noted that the size of the parallax search window 92 is not limited to $4 \times 4$ pixels, and it may be changed to other various sizes. A parallax search window having different numbers of pixels in the vertical and horizontal directions may be employed.

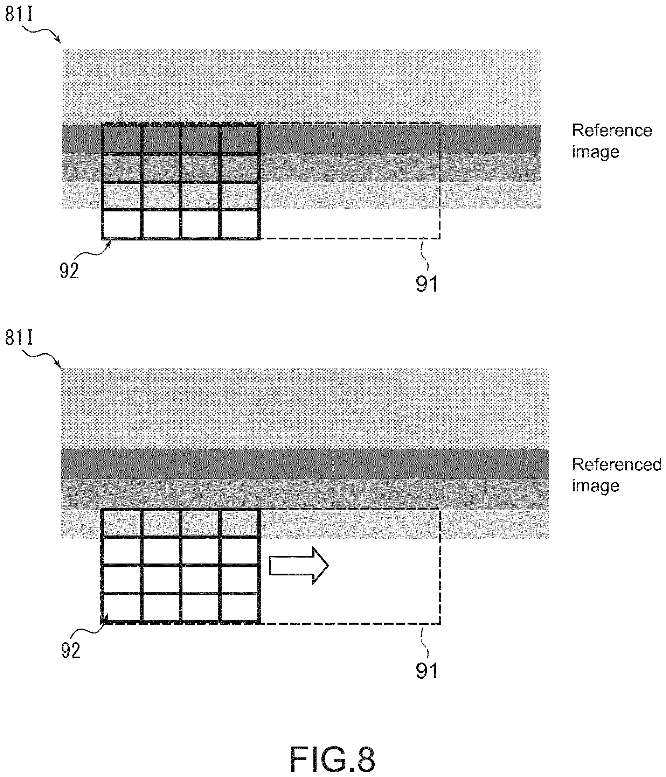

In this example, it can be seen that a sharp peak appears in the degree of matching when the position of the parallax search window 92 with respect to the referenced image is vertically moved by the distance corresponding to two pixels within the parallax search range 91 as in Fig. 7C, and a parallax can be highly accurately obtained. In contrast, in horizontal search, a large change does not appear in an image within the parallax search window 92 horizontally moved as shown in Fig. 8, and thus it is difficult to accurately calculate a parallax. In this manner, with the vertical search, a parallax can be highly accurately calculated from a stereo image obtained by imaging a level difference portion of a road surface. Thus, it is effective for improving the accuracy in detecting a road surface state such as a height and irregularities of the road surface.

The vertical-parallax information obtained in the above-mentioned manner is saved in the memory 30. After that, on the basis of the vertical-parallax information saved in the memory 30, the road surface displacement calculation unit 22 calculates a distance L from the stereo camera 10 to the point for detection and a height h of the road surface of the point for detection K, and supplies them to the suspension system 60 as the road surface displacement information.

As described above, in a case where the image of the level difference is included in the images of the road surface taken by the stereo camera 10, for example, the device for detecting a road surface state of this embodiment 1 is capable of more highly accurately calculating parallax information and is capable of generating more highly accurate road surface displacement information.

[Discrimination between Level Difference and Slope]

In the device for detecting a road surface state of this embodiment, it is possible to discriminate a level difference of the road surface from a slope of the road surface.

The image processing unit 21 of the arithmetic processing circuit 20 extracts horizontal edge components from the images taken by the stereo camera 10, and outputs position information of each of those edge components in the coordinate space of the image to the road surface displacement calculation unit 22. The road surface displacement calculation unit 22 discriminates the level difference of the road surface and the slope from each other on the basis of a relationship between a distance between a plurality of edges adjacent to each other in a vertical axis direction of the coordinate space of the image and a displacement amount of a height of the road surface which corresponds to a position of each edge. For example, in a case where the height of the road surface continuously increases or decreases at shorter intervals than a threshold for slope discrimination in the vertical axis direction of the coordinate space of the image, the road surface displacement calculation unit 22 determines it as the slope. In a case where the height of the road surface sharply increases or decreases at intervals determined on the basis of a threshold for level difference discrimination which is smaller than the threshold for slope discrimination in the vertical axis direction of the coordinate space of the image, the road surface displacement calculation unit 22 determines it as the level difference.

[Supplements, etc.]

The present invention is not limited to the above-mentioned embodiment, and various modifications can be made without departing from the range of technical ideas of the present invention.

The two cameras 10A, 10B of the stereo camera 10 only need to be arranged such that the optical axes 11A, 11B thereof are vertically spaced apart from each other such that a parallax can be vertically generated. At this time, the direction of the base-line longitudinal axis C of the two cameras 10A, 10B only needs to be set to the vertical direction. Alternatively, the two cameras 10A, 10B may be arranged, horizontally spaced apart from each other and the vertical direction such that left, right, upper, and lower parallaxes are generated.

As described above, in accordance with this embodiment, a parallax can be highly accurately calculated from a stereo image obtained by imaging a level difference portion of a road surface, and a road surface state such as a height of the road surface can be more highly accurately detected.

In addition, the present invention can be applied not only to the vehicle traveling the road surface but also to an apparatus, a robot, and the like for various types of transportation which move on a traveling surface such as a floor in a room. Furthermore, the present invention can be applied to another object as long as it is a movable object.

Reference Signs List

| 1 | device for detecting road surface state |
| 10 | stereo camera |
| 10A | upper camera |
| 10B | lower camera |
| 20 | arithmetic processing circuit |
| 21 | image processing unit |
| 22 | road surface displacement calculation unit |
| 30 | memory |
| 60 | suspension system |

**Claims**

1. A device for detecting a road surface state, comprising:

   a stereo camera including a plurality of cameras that each image a road surface in a movement direction of an object and are arranged such that a parallax is vertically generated; and
   an arithmetic processing circuit that vertically searches for corresponding points of a plurality of images taken by the plurality of cameras of the stereo camera, to thereby calculate a parallax, and detects a state of the road surface on a basis of the calculated parallax.

2. The device for detecting a road surface state according to claim 1, wherein
   the arithmetic processing circuit is configured to calculate the height of the road surface on the basis of the calculated parallax.

3. The device for detecting a road surface state according to claim 2, wherein
   the arithmetic processing circuit is configured to extract a component of an edge in a horizontal axis direction of the image on the basis of the calculated parallax and discriminate a level difference of the road surface and a slope from each other on a basis of a relationship between a distance between a plurality of edges adjacent to each other in a vertical axis direction of the image and a displacement amount of a height.

FIG.1

FIG.2

50

Steering angle
sensor

20

Arithmetic processing circuit

10

Stereo camera

Image processing
unit

21

Road surface
displacement
calculation unit

22

60

Suspension system

10A — Camera

Image
distortion
correction

10B — Camera

Filtering

Parallax
calculation

FIG.3

30 — Memory

FIG.4

START

Read reference image and referenced image — S101

Set each size of parallax search range and parallax search window — S102

Set point of origin of reference image as pixel of interest — S103

Perform matching of image of parallax search window including pixel of interest of reference image and image of same parallax search window of referenced image — S104

Vertically move position of parallax search window of referenced image by distance corresponding to one pixel — S105

Has processing within parallax search range been completed? — S106

NO

YES

Calculate vertical distance between parallax search window which provides maximum degree of matching and initial parallax search window as parallax — S107

Move pixel of interest — S108

Has search of all pixels been completed? — S109

NO

YES

END

FIG.5

80

81

Y

X

# FIG.6

91

81I

Reference image

92

81I

91

Referenced image

92

# FIG.7A

91

81 I

Reference image

92

81 I

91

Referenced image

92

# FIG.7B

91

81I

Reference image

92

81I

91

Referenced image

92

# FIG.7C

91

81 I

Reference image

92

81 I

91

Referenced image

92

# FIG.7D

FIG.8

## INTERNATIONAL SEARCH REPORT

| International application No. |
|---|
| PCT/JP2017/016088 |

**A. CLASSIFICATION OF SUBJECT MATTER**

*G06T7/00*(2017.01)i, *B60R21/00*(2006.01)i, *G01B11/02*(2006.01)i, *G06T1/00* (2006.01)i, *G06T7/593*(2017.01)i, *G08G1/00*(2006.01)i, *H04N7/18*(2006.01)i

According to International Patent Classification (IPC) or to both national classification and IPC

**B. FIELDS SEARCHED**

Minimum documentation searched (classification system followed by classification symbols)
G06T7/00, B60R21/00, G01B11/02, G06T1/00, G06T7/593, G08G1/00, H04N7/18

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | Morito SHIOHARA et al., "Real-times Stereoscopic Rangefinding Between Vehicles", IEICE Technical Report IE96-47 to 56 Gazo Kogaku, 27 September 1996 (27.09.1996), vol.96, no.280, pages 13 to 18 | 1-2<br>3 |
| Y | JP 2014-89548 A (Sharp Corp.), 15 May 2014 (15.05.2014), paragraphs [0041] to [0042] & WO 2014/064990 A1 | 3 |
| A | JP 2004-240480 A (Matsushita Electric Industrial Co., Ltd.), 26 August 2004 (26.08.2004), paragraphs [0032] to [0084]; fig. 2 (Family: none) | 1-3 |

☐ Further documents are listed in the continuation of Box C.　　☐ See patent family annex.

| | |
|---|---|
| *　　Special categories of cited documents:<br>"A"　document defining the general state of the art which is not considered　to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
|---|---|
| 27 June 2017 (27.06.17) | 18 July 2017 (18.07.17) |

| Name and mailing address of the ISA/<br>　Japan Patent Office<br>　3-4-3,Kasumigaseki,Chiyoda-ku,<br>　Tokyo 100-8915,Japan | Authorized officer<br><br>Telephone No. |
|---|---|

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2014089548 A